# EUROPEAN PATENT APPLICATION

(11) **EP 4 056 648 A1**
(43) Date of publication of application: **14.09.2022**
(21) Application number: 20885236.8
(22) Date of filing: 05.11.2020
(51) Int. Cl.: C08L 27/12, C08L 33/14, C09D 201/00, C08K 3/00, C09D 7/61, C09D 7/65

(54) **COATING-FORMING COMPOSITION, COATING, AND CHEMICAL LIQUID**

(30) Priority: 05.11.2019 JP 2019201079
(71) Applicant: Daikin Industries, Ltd., Osaka-shi, Osaka 530-8323 (JP)
(72) Inventor: INOUE, Ryou, Osaka-shi, Osaka 530-8323 (JP); MORITA, Masamichi, Osaka-shi, Osaka 530-8323 (JP); KAGAWA, Michiru, Osaka-shi, Osaka 530-8323 (JP); YAMAGUCHI, Hiroki, Osaka-shi, Osaka 530-8323 (JP)
(74) Representative: Hoffmann Eitle
(86) International application number: PCT/JP2020/041435
(87) International publication number: WO 2021/090902

(57) **Abstract**

The present disclosure provides a film-forming composition capable of forming a film having excellent water repellency, a high level of hardness, and excellent water resistance, and provides the film. The film-forming composition of the present disclosure contains an inorganic fine particle, a polymerizable component, and a water-repellent component, wherein the inorganic fine particle has an average particle size of 100 nm or more and 5 µm or less, the content of the inorganic fine particle is 5 to 40 parts by mass per 100 parts by mass of the total mass of the inorganic fine particle, the polymerizable component, and the water-repellent component, and the water-repellent component is a polymer having at least a structure unit based on the compound represented by the following formula (1): 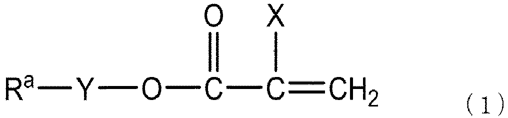 wherein X represents a hydrogen atom etc., Y represents a direct bond, a C₁₋₁₀ hydrocarbon group optionally having an oxygen atom etc., R^{a} represents a linear or branched alkyl group having 20 or less carbon atoms, or a linear or branched fluoroalkyl group having 6 or less carbon atoms etc.

## Description

### Technical Field

The present disclosure relates to a film-forming composition, a film, and a chemical solution.

### Background Art

Various films have been proposed that can impart super water repellency to the surface of an object. For example, PTL 1 discloses that the use of fine particles having polymerizable groups and a compound having two or more polymerizable groups per molecule provides a super water-repellent film that satisfies both super water repellency and abrasion resistance. PTL 2 discloses a technique of forming a super water-repellent, fluorine-containing film that satisfies both super water repellency and abrasion resistance by appropriately controlling the properties of the film.

PTL 3 also discloses a film-forming composition containing a fluorine-based copolymer that contains a fluoroolefin, a perfluoroalkyl group-containing monomer, and a hydroxyl group-containing unsaturated monomer, and fine silica powder. The composition is said to be able to form a film with excellent water and oil repellency, mold releasability, peelability, and storage stability.

### Citation List

### Patent Literature

PTL 1: WO2016/056663A
PTL 2: WO2017/179678A
PTL 3: JP2011-84745A

### Summary of Invention

### Technical Problem

An object of the present disclosure is to provide a film-forming composition capable of forming a film that has excellent water repellency, a high level of hardness, and excellent water resistance, a film, and a chemical solution.

### Solution to Problem

Specifically, the present disclosure includes, for example, the subject matter described in the following items.
Item 1. A film-forming composition comprising
   an inorganic fine particle,
   a polymerizable component, and
   a water-repellent component, wherein
   the inorganic fine particle has an average particle size of 100 nm or more and 5 µm or less,
   the content of the inorganic fine particle is 5 to 40 parts by mass per 100 parts by mass of the total mass of the inorganic fine particle, the polymerizable component, and the water-repellent component, and
   the water-repellent component is a polymer having at least a structure unit based on a compound represented by the following formula (1): 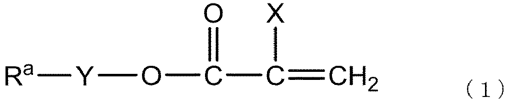 wherein
   X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
   Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the-CH₂CH(OY¹)CH₂- group is bound to R^{a}, and the left end of the -CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the - (CH₂)ₙSO₂- group is bound to O, and
   R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.
Item 2. The film-forming composition according to Item 1, wherein the content of the water-repellent component is 0.1 to 10 parts by mass per 100 parts by mass of the total mass of the inorganic fine particle, the polymerizable component, and the water-repellent component.
Item 3. The film-forming composition according to Item 1 or 2, wherein the polymerizable component contains a polymer having a crosslinkable functional group and a curing agent.
Item 4. A film comprising a cured product of the film-forming composition of any one of Items 1 to 3.
Item 5. A film comprising
   an inorganic fine particle,
   a binder component, and
   a water-repellent component, wherein
   the inorganic fine particle has an average particle size of 100 nm or more and 5 µm or less,
   the content of the inorganic fine particle is 5 to 40 parts by mass per 100 parts by mass of the total mass of the inorganic fine particle, the binder component, and the water-repellent component,
   the water-repellent component is a polymer having at least a structure unit based on a compound represented by the following formula (1):

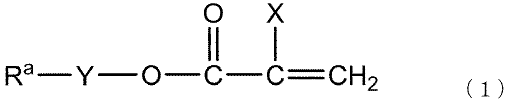

      wherein
   X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
   Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH (OY¹) CH₂- group wherein Y¹ represents a hydrogen atom or an acetyl group, the right end of the -CH₂CH (OY¹) CH₂- group is bound to R^{a}, and the left end of the -CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the - (CH₂)ₙSO₂- group is bound to O, and
   R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.
Item 6. The film according to Item 5, wherein the content of the water-repellent component is 0.1 to 10 parts by mass per 100 parts by mass of the total mass of the inorganic fine particle, the binder component, and the water-repellent component.
Item 7. A film comprising an inorganic fine particle, wherein the inorganic fine particle has an average particle size of 100 nm or more and 5 µm or less, a water contact angle of 150° or greater, and a pencil hardness of HB or higher.
Item 8. The film according to Item 7, further comprising a water-repellent component containing no fluorine atom.
Item 9. The film according to Item 7 or 8, having a water contact angle of 150° or greater after being rubbed with a paper waste cloth at a load of 100 g/cm² at least 50 times.
Item 10. A chemical solution comprising the film-forming composition of any one of Items 1 to 3.

### Advantageous Effects of Invention

The film-forming composition according to the present disclosure forms a film that has excellent water repellency, a high level of hardness, and excellent water resistance.

The film according to the present disclosure has excellent water repellency, a high level of hardness, and excellent water resistance.

### Description of Embodiments

Super water-repellent films tend to lose their water repellency, for example, after they are exposed to pure water for a certain period of time. Thus, there has been demand for increasing the water resistance of super water-repellent films in order to maintain their high performance over a long period of time.

Given the circumstances above, the present inventors conducted extensive research with the aim of forming a film that has excellent water repellency, a high level of hardness, and excellent water resistance, and then found that the object can be achieved by combining specific inorganic fine particles, a specific polymerizable component, and a specific water-repellent component. The following describes embodiments of the present disclosure in detail.

In the present specification, the terms "comprising," "containing," and "including" include the concepts of comprising, containing, including, consisting essentially of, and consisting of.

In the present specification, the numerical range "X to Y" indicates a range including the numerical values X and Y as the minimum and maximum values. In the graduated numerical ranges described in the present specification, the upper or lower limit of the numerical range of one instance can be freely combined with the upper or lower limit of the numerical range of another instance. In the numerical ranges described in the present specification, the upper or lower limits of the numerical ranges may be replaced by the values shown in the Examples or by values that can be uniquely derived from the Examples.

### 1. Film-forming Composition

The film-forming composition according to the present disclosure contains at least inorganic fine particles, a polymerizable component, and a water-repellent component.

### Inorganic Fine Particle

The inorganic fine particles in the film-forming composition according to the present disclosure have an average particle size of 100 nm or more and 5 µm or less. The average particle size of the inorganic fine particles in the film-forming composition is measured in accordance with the following procedure. The volatile component of the film-forming composition is removed by heating treatment (300°C, 3 hours), and the obtained fine particles are directly observed with a scanning electron microscope. Two hundred fine particles in a captured image are selected, and the calculated average of the equivalent circle diameter of these particles is determined to be the average particle size of the inorganic fine particles in the film-forming composition.

The inorganic fine particles can be of any type as long as the particles have an average particle size of 100 nm or more and 5 µm or less. Examples of inorganic fine particles include a wide range of known fine particles of metal oxides. Specific metal oxides include silica, alumina, titanium oxide, and zirconia. From the standpoint of the ease of increasing the hardness and water resistance of films, the inorganic fine particles preferably contain silica. The inorganic fine particles may be formed only of silica.

Inorganic fine particles having an average particle size of less than 100 nm or more than 5 µm result in the composition of the present disclosure being unable to exhibit desired properties. The average particle size of the inorganic fine particles is more preferably 1 µm or more and 3 µm or less.

The inorganic fine particles can have any specific surface area. For example, from the standpoint of the ease of increasing the hardness of the obtained film, the specific surface area is preferably 30 to 700 m²/g, and more preferably 100 to 300 m²/g.

The specific surface area of the inorganic fine particles in the film-forming composition according to the present disclosure refers to a value as measured according to BET theory ("BET specific surface area").

The surface of the inorganic fine particles may be hydrophilic or hydrophobic. The inorganic fine particles contained in the film-forming composition according to the present disclosure may be a mixture of hydrophilic inorganic fine particles and hydrophobic inorganic fine particles.

The inorganic fine particles may be of any shape. For example, the inorganic fine particles may have a spherical shape or an elliptical shape, or may be indefinitely shaped particles having an irregular shape.

### Water-repellent Component

The water-repellent component in the film-forming composition according to the present disclosure is a component capable of imparting water repellency to a film when the film is formed. The water-repellent component has a structure unit based on a compound represented by the following formula (1).

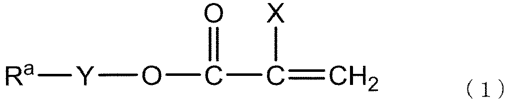

In formula (1), X represents a hydrogen atom, a fluorine atom, a chlorine atom, a bromine atom, an iodine atom, a CFX¹X² group (wherein X¹ and X² are identical or different and represent a hydrogen atom, a fluorine atom, or a chlorine atom), a cyano group, a C₁₋₆ linear or branched fluoroalkyl group, a substituted or unsubstituted benzyl group, a substituted or unsubstituted phenyl group, or a C₁₋₂₀ linear or branched alkyl group. When X is an alkyl group or fluoroalkyl group having 3 or more carbon atoms, the alkyl group or fluoroalkyl group may be either cyclic or non-cyclic. When X is an alkyl group, the number of carbon atoms is preferably 1 to 10, more preferably 1 to 6, and still more preferably 1 to 2. When X is a fluoroalkyl group, the number of carbon atoms is preferably 1 to 6, more preferably 1 to 4, and still more preferably 1 to 2.

In formula (1), Y represents a direct bond, a C₁₋₁₀ hydrocarbon group optionally having an oxygen atom, a -CH₂CH₂N(R¹)SO₂- group (wherein R¹ represents a C₁₋₄ alkyl group, the right end of the -CH₂CH₂N(R¹)SO₂- group is bound to R^{a}, and the left end of the -CH₂CH₂N(R¹)SO₂- group is bound to O), a - CH₂CH(OY¹)CH₂- group (wherein Y¹ represents a hydrogen atom or an acetyl group, the right end of the -CH₂CH(OY¹)CH₂- group is bound to R^{a}, and the left end of the -CH₂CH(OY¹)CH₂- group is bound to O), or a -(CH₂)ₙSO₂- group (wherein n is 1 to 10, the right end of the -(CH₂)ₙSO₂- group is bound to R^{a}, and the left end of the - (CH₂)ₙSO₂- group is bound to O). The phrase "direct bond" means that R^{a} and O adjacent to Y in formula (1) are directly bonded to each other; i.e., Y contains no element. When Y is a C₁₋₁₀ hydrocarbon group, Y is specifically a C₁₋₁₀ alkylene group, preferably a C₁₋₆ alkylene group, and still more preferably a C₁₋₂ alkylene group.

In formula (1), R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000. The fluoroalkyl group is, for example, preferably a perfluoroalkyl group, and the fluoropolyether group is, for example, preferably a perfluoropolyether group.

Specific examples of the compound represented by formula (1) include acrylic acid esters disclosed in PTL 1.

In particular, from the standpoint of excellent water repellency and oil repellency of the obtained film and the ease of increasing water resistance of the film, the compound represented by formula (1) is a compound wherein X represents a hydrogen atom, a chlorine atom, a fluorine atom, or a methyl group, Y represents a direct bond or a C₁₋₁₀ alkylene group (preferably a C₁₋₆ alkylene group, more preferably a C₁₋₂ alkylene group), and R^{a} represents a C₁₋₂₀ linear or branched alkyl group, a C₁₋₆ linear or branched fluoroalkyl group, a polyether group having a molecular weight of 400 to 5000, or a fluoropolyether group having a molecular weight of 400 to 5000. More preferably, the compound represented by formula (1) is a compound wherein X represents a hydrogen atom or a methyl group, Y represents a C₁₋₂ alkylene group, and R^{a} represents a C₁₋₆ linear or branched fluoroalkyl group; or a compound wherein X represents a hydrogen atom or a methyl group, Y represents a direct bond, and R^{a} represents a C₁₋₂₀ linear or branched alkyl group.

Specific examples of the compound represented by formula (1) include fluoroalkyl (meth)acrylate in which the fluoroalkyl group has 1 to 6 carbon atoms, and alkyl (meth)acrylate in which the alkyl group has 1 to 20 (preferably 1 to 18) carbon atoms.

The water-repellent component may contain, in addition to the structure unit based on the compound represented by formula (1), a structure unit based on (meth)acrylate having an epoxy moiety or a structure unit based on (meth)acrylate having an amide bond (e.g., the compound represented by formula (1) wherein Y is replaced by a functional group having an amide bond). For example, (meth)acrylate having an epoxy moiety includes glycidyl (meth)acrylate, and (meth)acrylate having an amide bond includes amidoethyl stearate (meth) acrylate.

Specific examples of the water-repellent component include polymers having (meth)acrylate as the main skeleton and a fluoroalkyl group or an alkyl group at its side chain moiety. The water-repellent component can be produced, for example, by a known method. Alternatively, the water-repellent component can obtained from commercially available products, such as Unidyne TG series (trade name) produced by Daikin Industries, Ltd.

### Polymerizable Component

The polymerizable component in the film-forming composition according to the present disclosure serves as a binder component when a film is formed, described later, and can be referred to as a "binder component precursor." Specifically, the polymerizable component can be cured (e.g., polymerization reaction or curing reaction), and forms a binder component of the film after curing.

The polymerizable component can be of any type as long as the polymerizable component can form a binder component, and can be selected from a wide range of known materials. Examples of the polymerizable component contained in the film-forming composition include a component that undergoes curing reaction due to heat to thereby provide a cured product, and a component that provides a cured product due to light irradiation, such as UV. The component that undergoes curing reaction due to heat to give a cured product is expressed as a "thermosetting resin component," and the component that gives a cured product due to light irradiation is expressed as a "photo-curable resin component."

The thermosetting resin component can be of any type and can be, for example, a mixture of a known polymer and an optionally added curing agent. For example, such a polymer preferably has a crosslinkable functional group. In this case, crosslinking reaction is more likely to proceed, for example, by thermosetting. From this viewpoint, the polymerizable component (thermosetting resin component) preferably contains a polymer having a crosslinkable functional group and a curing agent.

The polymer contained in thermosetting resin component may or may not have a fluorine atom (fluoroalkyl group). However, from the standpoint of the ease of increasing the water repellency of the resulting film, the polymer contained in thermosetting resin component preferably has a fluoroalkyl group.

The polymer contained in the thermosetting resin component is preferably a compound that undergoes a curing reaction, for example, due to the reaction of a curing agent, described later, and heat. Examples include the polymer having a crosslinkable functional group described above. The crosslinkable functional group is, for example, preferably a hydroxyl group, a carboxyl group, an amino group, a thiol group, or an isocyanate group. In this case, the compound preferably further has a fluoroalkyl group. The polymer having a crosslinkable functional group is simply referred to below as a "crosslinkable polymer."

From these viewpoints, the crosslinkable polymer for use is preferably a fluorine-containing polymer having a reactive functional group. The fluorine-containing polymer is, for example, a polymer containing
(a) a tetrafluoroethylene structure unit,
(b) a non-aromatic vinyl ester monomer structure unit having no hydroxyl group and no carboxyl group,
(c) a hydroxyl group-containing vinyl monomer structure unit having no aromatic group and no carboxyl group,
(e) a carboxyl group-containing monomer structure unit having no hydroxyl group and no aromatic group, and
(f) another monomer structure unit (however, not containing (d) an aromatic group-containing monomer structure unit having no hydroxyl group and no carboxyl group). This polymer is expressed as "polymer F" below. A thermosetting resin that is polymer F particularly increases the water resistance of the film.

The lower limit of the content of the tetrafluoroethylene structure unit (a) in the entire amount of polymer F is 20 mol%, preferably 30 mol%, more preferably 40 mol%, and particularly preferably 42 mol%; and the upper limit of the content of the tetrafluoroethylene structure unit (a) in the entire amount of polymer F is 49 mol%, and preferably 47 mol%.

Monomers that give the non-aromatic vinyl ester monomer structure unit (b) are, for example, one or more members of the following: vinyl acetate, vinyl propionate, vinyl butyrate, vinyl isobutyrate, vinyl pivalate, vinyl caproate, vinyl versatate, vinyl laurate, vinyl stearate, and vinyl cyclohexylcarboxylate. These monomers are non-aromatic monomers having no hydroxyl group and no carboxyl group. From the standpoint of excellent weatherability, a particularly preferable monomer that gives the non-aromatic vinyl ester monomer structure unit (b) is one member selected from the group consisting of vinyl versatate, vinyl laurate, vinyl stearate, vinyl cyclohexylcarboxylate, and vinyl acetate. Of these, from the standpoint of chemical resistance, a non-aromatic carboxylic acid vinyl ester, particularly a carboxylic acid vinyl ester in which the carboxylic acid has 6 or more carbon atoms is preferable, and a carboxylic acid vinyl ester in which the carboxylic acid has 9 or more carbon atoms is more preferable. The upper limit of the number of carbon atoms of the carboxylic acid of the carboxylic acid vinyl ester is 20 or less, and preferably 15 or less. A most preferable specific example is vinyl versatate.

The lower limit of the content of the non-aromatic vinyl ester monomer structure unit (b) in the entire amount of polymer F is 25 mol%, and preferably 30 mol%; and the upper limit of the content of the non-aromatic vinyl ester monomer structure unit (b) in the entire amount of polymer F is 69.9 mol%, preferably 60 mol%, more preferably 43 mol%, and particularly preferably 40 mol%.

The monomer that gives the hydroxyl group-containing vinyl monomer structure unit (c) is a non-aromatic monomer containing no carboxyl group, such as hydroxyalkyl vinyl ether or hydroxyalkyl allyl ether represented by formula (2):

CH₂=CHR¹⁰ (2) .

In formula (2), R¹⁰ represents -OR²⁰ or -CH₂OR²⁰ (wherein R²⁰ represents a hydroxyl-containing alkyl group). R²⁰ is, for example, a C₁₋₈ linear or branched alkyl group having one to three (preferably one) hydroxyl groups attached. An example of formula (2) is one, two, or more members of the following: 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. Of these, the monomer that gives the hydroxyl group-containing vinyl monomer structure unit (c) is preferably 4-hydroxybutyl vinyl ether and 2-hydroxyethyl vinyl ether.

The presence of this hydroxyl group-containing vinyl monomer structure unit (c) allows the film to have improved processability, impact resistance, and contamination resistance.

The lower limit of the content of the hydroxyl group-containing vinyl monomer structure unit (c) in the entire amount of polymer F is 8 mol%, preferably 10 mol%, and still more preferably 15 mol%; and the upper limit of the content of the hydroxyl group-containing vinyl monomer structure unit (c) in the entire amount of polymer F is 30 mol%, and preferably 20 mol%.

Although polymer F can be basically formed of components (a), (b), and (c) (however, in each unit, two or more members may be copolymerized), polymer F may also contain another copolymerizable monomer unit (f) in an amount of up to 10 mol%. The copolymerizable monomer structure unit (f) is a monomer structure unit other than components (a), (b), and (c), the aromatic group-containing monomer structure unit (d), and the carboxyl group-containing monomer structure unit (e).

The monomer that gives the copolymerizable monomer structure unit (f) is, for example, an alkyl vinyl ether, such as methyl vinyl ether, and ethyl vinyl ether; and a non-fluorine-based olefin, such as ethylene, propylene, n-butene, and isobutene. The content of the copolymerizable monomer structure unit (f) is 10 mol% or less, preferably less than 5 mol%, and still more preferably 4 mol% or less in polymer F.

Polymer F may further contain the aromatic group-containing monomer structure unit having no hydroxyl group and no carboxyl group (d). The aromatic group-containing monomer structure unit having no hydroxyl group and no carboxyl group (d) is, for example, one, two, or more members of the following: vinyl benzoate monomers such as vinyl benzoate, and vinyl para-t-butyl benzoate, particularly preferably vinyl para-t-butyl benzoate, and still more preferably vinyl benzoate.

The lower limit of the content of the aromatic group-containing monomer structure unit (d) in polymer F is 2 mol%, and preferably 4 mol%; and the upper limit of the content of the aromatic group-containing monomer structure unit (d) in polymer F is 15 mol%, preferably 10 mol%, and more preferably 8 mol%.

Polymer F may further contain the carboxyl group-containing monomer structure unit having no hydroxyl group and no aromatic group (e). The carboxyl group-containing monomer is, for example, one, two, or more members of the following: acrylic acid, methacrylic acid, vinyl acetate, crotonic acid, cinnamic acid, 3-allyloxy propionic acid, itaconic acid, itaconic acid monoester, maleic acid, maleic acid monoester, maleic acid anhydride, fumaric acid, fumaric acid monoester, vinyl phthalate, and vinyl pyromellitate. Of these, the following monomers with low homopolymerizable level is preferable: crotonic acid, itaconic acid, maleic acid, maleic acid monoester, fumaric acid, fumaric acid monoester, and 3-allyloxy propionic acid.

The lower limit of the content of the carboxyl group-containing monomer structure unit (e) in polymer F is 0.1 mol%, and preferably 0.4 mol%; and the upper limit of the content of the carboxyl group-containing monomer structure unit (e) in polymer F is 2.0 mol%, and preferably 1.5 mol%.

Polymer F has a number average molecular weight of, for example, 1000 to 1000000, and preferably 3000 to 50000 as measured by gel permeation chromatography (GPC) using tetrahydrofuran as an eluent. Polymer F has a glass transition temperature (2nd run) of, for example, 10 to 60°C, and preferably 20 to 40°C as determined with a differential scanning calorimeter (DSC). The method for producing polymer F can be any method and can be selected from a wide range of known production methods. Polymer F can also be obtained from commercially available products.

Specific examples of polymer F include Zeffle (registered trademark) GK series produced by Daikin Industries, Ltd.

The thermosetting resin component of the film-forming composition according to the present disclosure may contain a curing agent as described above. The curing agent can be any curing agent and can be selected, for example, from a wide range of compounds for use in curing agents for thermosetting resin. In particular, the curing agent is preferably a compound having two or more polymerizable groups per molecule.

Specific examples of curing agents include isocyanate-based curing agents. Examples of isocyanate-based curing agents include isocyanate group-containing compounds (simply "isocyanate compound" below). Examples of isocyanate compounds include a compound represented by the following formula (20).

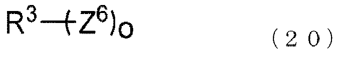

In formula (20), Z⁶ is a linear or branched monovalent hydrocarbon group or carbonyl group that has an isocyanate group at least at its one terminal, that may have at least one carbon atom replaced with a heteroatom, that may have at least one hydrogen atom replaced with a halogen atom, and that may have a carbon-carbon unsaturated bond. R³ is a branched or cyclic divalent or higher-valent hydrocarbon group or carbonyl group that may have at least one carbon atom replaced with a heteroatom, that may have at least one hydrogen atom replaced with a halogen atom, that may have at least one carbon atom replaced with a heteroatom, and that may have a carbon-carbon unsaturated bond. In formula (20), o is an integer of 2 or higher.

R³ preferably has 1 to 20 carbon atoms, more preferably 2 to 15 carbon atoms, and still more preferably 3 to 10 carbon atoms.

Z⁶ has 1 to 20 carbon atoms, more preferably 2 to 15 carbon atoms, and still more preferably 3 to 10 carbon atoms.

The isocyanate compound for use may be one member or a combination of two or more members.

The isocyanate compound is, for example, a polyisocyanate. In the present specification, "polyisocyanate" refers to a compound having two or more isocyanate groups per molecule. The isocyanate compound may be a polyisocyanate obtained by performing trimerization of a diisocyanate. Such a polyisocyanate obtained by performing trimerization of a diisocyanate can be a triisocyanate. A polyisocyanate that is a trimer of a diisocyanate may be present in the form of a polymer as a result of polymerization of the polyisocyanate.

The diisocyanate can be any diisocyanate, and the diisocyanate includes a diisocyanate having its isocyanate group bound to an aliphatic group, such as trimethylene diisocyanate, hexamethylene diisocyanate, isophorone diisocyanate, xylylene diisocyanate, hydrogenated xylylene diisocyanate, cyclohexane diisocyanate, dicyclohexyl methane diisocyanate, and norbornane diisocyanate; and a diisocyanate having its isocyanate group bound to an aromatic group, such as tolylene diisocyanate, diphenylmethane diisocyanate, polymethylene polyphenyl polyisocyanate, tolidine diisocyanate, and naphthalene diisocyanate.

Specific polyisocyanates include, but are not limited to, compounds having the following structures.

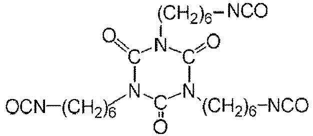

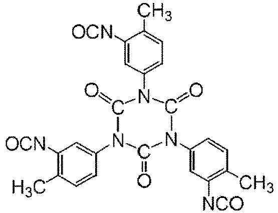

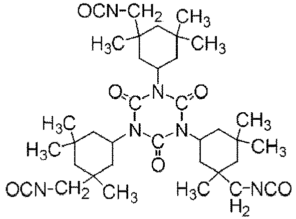

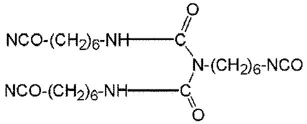

These polyisocyanates may be present in the form of a polymer. For example, isocyanurate polyisocyanate of hexamethylene diisocyanate may contain a polymer with the following structure.

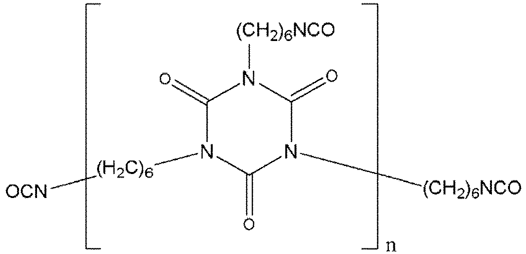

In a preferable embodiment, the isocyanate compound is an isocyanurate polyisocyanate.

The isocyanurate polyisocyanate may be in the form of a polymer. The isocyanurate polyisocyanate may be a monocyclic compound having only one isocyanurate ring or a polycyclic compound obtained by polymerizing this monocyclic compound.

In an embodiment in which two or more isocyanate compounds are used, a mixture containing a monocyclic compound having only one isocyanurate ring can be used.

In another embodiment in which two or more isocyanate compounds are used, a mixture containing an isocyanate compound that is an isocyanurate polyisocyanate can be used. The isocyanurate polyisocyanate may be, for example, a triisocyanate, and specifically a triisocyanate obtained by performing trimerization of a diisocyanate.

Specific examples of isocyanate compounds include 2,4-tolylene diisocyanate, diphenylmethane-4,4'-diisocyanate, xylylene diisocyanate, isophorone diisocyanate, lysine methyl ester diisocyanate, methyl cyclohexyl diisocyanate, trimethyl hexamethylene diisocyanate, hexamethylene diisocyanate, n-pentane-1,4-diisocyanate, trimers thereof, adducts thereof, biurets thereof, isocyanurates thereof, polymers thereof that have two or more isocyanate groups, and blocked isocyanates. Specific examples of more detailed curing agents for use include the following commercially available products: Sumidur (registered trademark) N3300 (produced by Sumika Covestro Urethane Co., Ltd.), Desmodur (registered trademark) N3600 (produced by Sumika Covestro Urethane Co., Ltd.), Desmodur T, L, IL, and HL series (produced by Sumika Covestro Urethane Co., Ltd.), Desmodur (registered trademark) 2460M (produced by Sumika Covestro Urethane Co., Ltd.), Sumidur (registered trademark) 44 series (produced by Sumika Covestro Urethane Co., Ltd.), SBU isocyanate series (produced by Sumika Covestro Urethane Co., Ltd.), Desmodur (registered trademark) E and M series (produced by Sumika Covestro Urethane Co., Ltd.), Sumidur HT (produced by Sumika Covestro Urethane Co., Ltd.), Desmodur N series (produced by Sumika Covestro Urethane Co., Ltd.), Desmodur Z4470 series (produced by Sumika Covestro Urethane Co., Ltd.), Duranate TPA-100 (produced by Asahi Kasei Corporation), Duranate TKA-100 (produced by Asahi Kasei Corporation), Duranate 24A-100 (produced by Asahi Kasei Corporation), Duranate 22A-75P (produced by Asahi Kasei Corporation), and Duranate P301-75E (produced by Asahi Kasei Corporation).

If the thermosetting resin component contains a curing agent, the content of the curing agent can be 10 to 100 mass%, and preferably 15 to 35 mass%, based on the total mass of the thermosetting resin component.

If the polymerizable component is a photo-curable resin component, the photo-curable resin component can be a monomer of any type that allows polymerization reaction caused by light irradiation such as UV to proceed, and the photo-curable resin component can be selected from, for example, a wide range of known photopolymerizable monomers. If the polymerizable component is a photo-curable resin component, it is also preferable to use, for example, a known photopolymerization initiator.

### Film-forming Composition

The content of the inorganic fine particles, the polymerizable component, and the water-repellent component in the film-forming composition according to the present disclosure is not limited as long as the effects of the present disclosure are not impaired.

The content of the inorganic fine particles in the film-forming composition according to the present disclosure is 5 to 40 parts by mass per 100 parts by mass of the total mass of the inorganic fine particles, the polymerizable component, and the water-repellent component (on a solids basis). A content of the inorganic fine particles falling outside this range may result in a lowered level of film hardness. The content of the inorganic fine particles is more preferably 20 to 40 parts by mass per 100 parts by mass of the total mass of the inorganic fine particles, the polymerizable component, and the water-repellent component (on a solids basis).

The content of the polymerizable component in the film-forming composition according to the present disclosure is preferably 50 to 90 parts by mass per 100 parts by mass of the total mass of the inorganic fine particles, the polymerizable component, and the water-repellent component (on a solids basis). In this case, the hardness of the film is unlikely to decrease, and the water repellency and water resistance are likely to increase. The content of the polymerizable component is more preferably 60 to 80 parts by mass per 100 parts by mass of the total mass of the inorganic fine particles, the polymerizable component, and the water-repellent component (on a solids basis).

For example, the content of the water-repellent component in the film-forming composition according to the present disclosure is preferably 0.1 to 10 parts by mass, and more preferably 1 to 5 parts by mass, per 100 parts by mass of the total mass of the inorganic fine particles, the polymerizable component, and the water-repellent component (on a solids basis).

In the film-forming composition according to the present disclosure, at least either the polymerizable component or the water-repellent component preferably has a fluorine atom (i.e., a fluoroalkyl group); more preferably, the polymerizable component has a fluorine atom. This allows the film formed from the film-forming composition to have excellent water repellency, a high level of hardness, excellent water resistance, and even possibly increased abrasion resistance. Of course, the polymerizable component and the water-repellent component both may contain a fluorine atom (a fluoroalkyl group). An example of the polymerizable component having a fluoroalkyl group is the case in which the crosslinkable polymer contained in the thermosetting resin component is polymer F. An example of the water-repellent component having a fluoroalkyl group is a polymer in which the fluoroalkyl group in the compound represented by formula (1) is C₁₋₆ fluoroalkyl (meth) acrylate.

If the water-repellent component contained in the film-forming composition according to the present disclosure does not contain a fluorine atom (in particular, a fluoroalkyl group), the resulting film is likely to have increased abrasion resistance. In particular, if R^{a} in the compound represented by formula (1) contained in the water-repellent component is a linear or branched alkyl group having 20 or less carbon atoms, the resulting film is more likely to have increased abrasion resistance. Examples of such a compound include saturated fatty acids contained in known lubrication oil. Examples of such lubrication oil include caprylic acid, capric acid, lauric acid, myristic acid, palmitic acid, and stearic acid contained in coconut oil, palm oil, rapeseed oil, or castor oil; and those with structures having a linear alkyl group with the number of carbon atoms equivalent to that of these saturated fatty acids.

The film-forming composition according to the present disclosure may contain other components as long as the film-forming composition contains the inorganic fine particles, the polymerizable component, and the water-repellent component. For example, the film-forming composition may optionally contain a solvent. The solvent for use can be of any type and can be selected from, for example, a wide range of solvents for use in forming films, such as fluorine-based solvents (e.g., hydrofluoroether), ester compounds, and alcohol compounds.

The content of the solvent contained in the film-forming composition is not limited, and can be, for example, 200 to 2000 parts by mass, per 100 parts by mass of the total mass of the inorganic fine particles, the polymerizable component, and the water-repellent component.

The film-forming composition may also contain additives other than solvents. The content of the additives in the film-forming composition is preferably 5 mass% or less based on the total mass of the inorganic fine particles, the polymerizable component, and the water-repellent component.

The film-forming composition may also contain, for example, organic fine particles; however, in order to develop the hardness of the film, the film-forming composition preferably contains no organic fine particles.

The method for preparing the film-forming composition according to the present disclosure is not limited. For example, the film-forming composition can be prepared by mixing inorganic fine particles, a polymerizable component (e.g., a thermosetting resin component containing polymer F and a curing agent), and a water-repellent component in predetermined amounts. The mixing method is also not limited. For example, a wide range of known mixers are usable.

The method for forming a film from the film-forming composition according to the present disclosure is not limited. For example, a film can be formed by coating a substrate for forming a film with the film-forming composition to form a coating, and curing the coating. The thus-obtained film is a cured product of the film-forming composition according to the present disclosure.

The method for applying the film-forming composition is not limited, and can be selected from a wide range of known methods for forming a coating. For example, the film-forming composition can be applied by a method such as brush coating, spraying, spin coating, or dispensing. The substrate for forming a coating of the film-forming composition can be of any type. Examples of substrates include known resin substrates, such as acrylic resin and polycarbonate resin, and other various substrates, such as metal and inorganic substrates.

The method for curing the film-forming composition is also not limited. For example, various methods such as thermosetting and photo-curing can be used, and thermosetting and photo-curing can be combined. If thermosetting is used, it is preferable to heat the coating of the film-forming composition to 60 to 150°C. In this case, a film is easily formed from the film-forming composition, and the film has a high level of hardness and excellent water resistance. The heating time is not limited, and can be suitably determined according to the heating temperature.

A chemical solution can be prepared from the film-forming composition according to the present disclosure. The chemical solution is suitable for use in forming a film because the chemical solution contains the film-forming composition according to the present disclosure. The chemical solution may be formed only of the film-forming composition, or the chemical solution may contain other additives (e.g., known additives for use in film-forming chemicals) as long as the properties intended by the film-forming composition according to the present disclosure are not impaired.

### 2. Film

The film according to the present disclosure can be formed, for example, from the film-forming composition according to the present disclosure described above, or the film according to the present disclosure can be formed from the chemical solution described above. In this case, the film according to the present disclosure is a cured product of the film-forming composition or chemical solution according to the present disclosure.

Thus, the film according to the present disclosure contains inorganic fine particles, a binder component, and a water-repellent component.

The inorganic fine particles in the film according to the present disclosure are the same as the inorganic fine particles contained in the film-forming composition according to the present disclosure. Thus, the inorganic fine particles have an average particle size of 100 nm or more and 5 µm or less.

The average particle size of the inorganic fine particles in the film is measured in accordance with the following procedure. First, the film is subjected to heating treatment to burn off the organic component in the film; this allows for the separation of fine particles in the film. The heating treatment is performed at 300°C for 3 hours in an air atmosphere. The obtained fine particles are directly observed with a scanning electron microscope. Two hundred fine particles in a captured image are selected, and their equivalent circle diameter is calculated. The average is determined to be the average particle size of the fine particles in the film.

The binder component in the film according to the present disclosure is a component as a result of curing of the polymerizable component. For example, if the polymerizable component is the thermosetting resin component described above, polymer F is the polymer cured (crosslinked) by the curing agent. The binder component may contain an uncured polymerizable component as long as the properties of the film according to the present disclosure are not impaired.

The water-repellent component in the film according to the present disclosure is the same as the water-repellent component contained in the film-forming composition according to the present disclosure described above. Thus, the water-repellent component in the film contains a polymer having a structure unit derived from the compound represented by formula (1), and the water-repellent component may also contain a structure unit derived from (meth)acrylate having an epoxy moiety or a structure unit derived from (meth)acrylate having an amide bond (e.g., the compound of formula (1) in which Y is replaced with a functional group having an amide bond), in addition to a structure unit derived from the compound represented by formula (1). For example, (meth)acrylate having an epoxy moiety includes glycidyl (meth)acrylate, and (meth)acrylate having an amide bond includes amidoethyl stearate (meth)acrylate.

The content of the inorganic fine particles in the film according to the present disclosure is 5 to 40 parts by mass per 100 parts by mass of the total mass of the inorganic fine particles, the binder component, and the water-repellent component. A film containing inorganic fine particles in an amount outside this range has a lowered level of film hardness. The content of the inorganic fine particles is preferably 20 to 40 parts by mass per 100 parts by mass of the total mass of the inorganic fine particles, the binder component, and the water-repellent component.

The content of the binder component in the film according to the present disclosure is preferably 50 to 90 parts by mass per 100 parts by mass of the total mass of the inorganic fine particles, the binder component, and the water-repellent component. In this case, the film hardness is unlikely to decrease, and the water repellency and water resistance are likely to increase. The content of the binder component is more preferably 60 to 80 parts by mass per 100 parts by mass of the total mass of the inorganic fine particles, the binder component, and the water-repellent component.

For example, the content of the water-repellent component in the film according to the present disclosure is preferably 0.1 to 10 parts by mass, and more preferably 1 to 5 parts by mass, per 100 parts by mass of the total mass of the inorganic fine particles, the binder component, and the water-repellent component.

In the film according to the present disclosure, at least either the binder component or the water-repellent component preferably has a fluorine atom (i.e., a fluoroalkyl group); more preferably, the binder component has a fluorine atom. This allows the film formed from the film-forming composition to have excellent water repellency, a high level of hardness, excellent water resistance, and even possibly increased abrasion resistance. A water-repellent component having no fluoroalkyl group contained in the film is more likely to notably increase the abrasion resistance of the film. Of course, the binder component and the water-repellent component may both have a fluorine atom (a fluoroalkyl group). An example of the binder component having a fluoroalkyl group is polymer F or its crosslinked form. An example of the water-repellent component having a fluoroalkyl group is a polymer in which the fluoroalkyl group in the compound represented by formula (1) is C₁₋₆ fluoroalkyl (meth)acrylate.

The film according to the present disclosure has, for example, a water contact angle of 150° or greater. This allows the film according to the present disclosure to exhibit excellent water repellency.

The film according to the present disclosure has, for example, a pencil hardness of HB or higher.

The film according to the present disclosure has, for example, a surface whose water contact angle is 150° or greater after being rubbed with a paper waste cloth at a load of 100 g/cm² at least 50 times.

The film according to the present disclosure, for example, has an average film thickness of 10 nm to 100 µm, a minimum local film thickness of 5 nm to 50 µm, and a maximum local film thickness of 15 nm to 150 µm; preferably an average film thickness of 15 nm to 95 µm, a minimum local film thickness of 10 nm to 45 µm, and a maximum local film thickness of 20 nm to 145 µm; and more preferably an average film thickness of 20 nm to 90 µm, a minimum local film thickness of 15 nm to 40 µm, and a maximum local film thickness of 25 nm to 140 µm. The average film thickness can be calculated, for example, from the dry film thickness determined from the coating amount, solids concentration, and density of the composition. The minimum local film thickness and the maximum local film thickness can be calculated with a device capable of measuring a three-dimensional shape. An example of such devices is a VK-X1000 shape analysis laser microscope (Keyence).

The film formed from the film-forming composition according to the present disclosure has excellent water repellency, a high level of hardness, and excellent water resistance. In particular, because of its excellent water resistance, the film is less likely to have its water repellency decrease than traditional films even if the film is exposed to water, whether salt water or not, for a long period of time. Consequently, the film formed from the film-forming composition according to the present disclosure is likely to maintain its properties over a long period of time. The film formed from the film-forming composition according to the present disclosure is also likely to have excellent abrasion resistance.

Thus, the film according to the present disclosure is used in imparting water repellency and/or oil repellency to a surface to be treated, and can be suitably used in various items that require super liquid repellency.

The use of the film according to the present disclosure is not limited. For example, the film according to the present disclosure can be suitably used in water-repellent and oil-repellent agents, frost formation retardants, anti-icing agents, snow protection agents, anti-fingerprint adhesion agents, anti-fingerprint agents, low friction agents, lubricants, protein adhesion control agents, cell adhesion control agents, microorganism adhesion control agents, scale adhesion inhibitors, mildew-proofing agents, anti-bacterial agents, etc.

### 3. Another Embodiment of Film

In another embodiment, the film according to the present disclosure may be a film that contains inorganic fine particles with an average particle size of 100 nm or more and 5 µm or less, and that have a water contact angle of 150° or greater, and a pencil hardness of HB or higher ("film in another embodiment" below). The method for forming the film in another embodiment is not limited. For example, the film in another embodiment can be formed by using the film-forming composition or chemical solution according to the present disclosure.

The inorganic fine particles for the film in another embodiment are also the same as the inorganic fine particles contained in the film-forming composition according to the present disclosure.

The inorganic fine particles of the film in another embodiment can be of any type as long as the inorganic fine particles have an average particle size of 100 nm or more and 5 µm or less, and can be selected, for example, from a wide range of known fine particles of metal oxides. Specifically, metal oxides include silica, alumina, titanium oxide, and zirconia. From the standpoint of the ease of increasing the film hardness, the inorganic fine particles are preferably silica.

Inorganic fine particles having an average particle size of less than 100 nm or more than 5 µm cannot exhibit desired properties. The average particle size of inorganic fine particles is more preferably 1 µm or more and 3 µm or less.

The content of the inorganic fine particles in the film in another embodiment is 5 to 40 parts by mass per 100 parts by mass of the total mass of the film. A content of the inorganic fine particles outside this range leads to a decreased level of film hardness. The content of the inorganic fine particles is more preferably 20 to 40 parts by mass per 100 parts by mass of the total mass of the film.

If the film in another embodiment contains the binder component described above, the content of the binder component is preferably 50 to 90 parts by mass per 100 parts by mass of the total mass of the film. In this case, the hardness of the film is unlikely to decrease, and the water repellency and water resistance are likely to increase. The content of the polymerizable component is more preferably 60 to 80 parts by mass per 100 parts by mass of the total mass of the film.

If the film in another embodiment contains the water-repellent component described above, the content of the water-repellent component is preferably 0.1 to 10 parts by mass, and more preferably 1 to 5 parts by mass, per 100 parts by mass of the total mass of the film.

The film in another embodiment can exhibit excellent water repellency because of the water contact angle of 150° or greater. The water contact angle can be adjusted by suitably selecting, for example, the type and content of the inorganic fine particles, binder component, and/or water-repellent component.

The film in another embodiment can exhibit an excellent level of hardness because of the pencil hardness of HB or higher. The pencil hardness can be adjusted by suitably selecting, for example, the type and content of the inorganic fine particles, binder component, and/or water-repellent component.

The film in another embodiment may have, for example, a surface whose water contact angle is 150° or greater after being rubbed with a paper waste cloth at a load of 100 g/cm² at least 50 times (preferably 50 times). This allows the film in another embodiment to have excellent abrasion resistance.

The film according to the present disclosure, for example, has an average film thickness of 10 nm to 100 µm, a minimum local film thickness of 5 nm to 50 µm, and a maximum local film thickness of 15 nm to 150 µm; preferably an average film thickness of 15 nm to 95 µm, a minimum local film thickness of 10 nm to 45 µm, and a maximum local film thickness of 20 nm to 145 µm; and more preferably an average film thickness of 20 nm to 90 µm, a minimum local film thickness of 15 nm to 40 µm, and a maximum local film thickness of 25 nm to 140 µm. The average film thickness can be calculated, for example, from the dry film thickness determined from the coating amount, solids concentration, and density of the composition. The minimum local film thickness and the maximum local film thickness can be calculated with a device capable of measuring a three-dimensional shape. An example of such devices is a VK-X1000 shape analysis laser microscope (Keyence).

The film in another embodiment, for example, preferably has a water contact angle of 150° or greater after the film is immersed for 72 hours in water at 10 to 30°C that is left to stand in a room temperature atmosphere. In this case, the film in another embodiment has excellent water resistance. The water contact angle can be adjusted, for example, by suitably selecting the type and content of the inorganic fine particles, binder component, and water-repellent component.

The use of the film in another embodiment according to the present disclosure is not limited. For example, the film in another embodiment according to the present disclosure can be suitably used in water-repellent and oil-repellent agents, frost formation retardants, anti-icing agents, snow protection agents, anti-fingerprint adhesion agents, anti-fingerprint agents, low friction agents, lubricants, protein adhesion control agents, cell adhesion control agents, microorganism adhesion control agents, scale adhesion inhibitors, mildew-proofing agents, anti-bacterial agents, etc.

Method for Measuring Various Physical Properties of Film According to Present Disclosure

The following explains the method for measuring various physical properties of the film according to the present disclosure (including the film in another embodiment described above).

### Water Contact Angle (Static Contact Angle)

The water contact angle refers to the static contact angle of water. The water contact angle is measured with a contact angle meter (Drop Master 701, Kyowa Interface Science Co., Ltd.). Specifically, the water contact angle is measured at 5 points per sample by using water (a droplet of 2 µL). When the static contact angle is 150° or greater, the liquid may be unable to stand on its own on the surface of a substrate. In such a case, the static contact angle is measured with a syringe needle as a support, and the value obtained by doing so is determined to be the static contact angle.

### Pencil Hardness

The pencil hardness is measured by a method in accordance with JIS K 5600-5.

### Contact Angle after 72-hour Immersion Test

The contact angle after a 72-hour immersion test can be measured by the same method as the method for measuring the water contact angle described above after immersing the film for 72 hours in water at 10 to 30°C that is left to stand in a room temperature atmosphere. In this case as well, the water contact angle can be measured with a contact angle meter (Drop Master 701, Kyowa Interface Science Co., Ltd.).

### Sliding Angle

The sliding angle is measured with a Drop Master 701 meter (produced by Kyowa Interface Science Co., Ltd.). After a water droplet of 20 µL is formed on the tip of a needle, the distance between the surface of a coated substrate placed on a horizontal sample stage and the water droplet on the tip of the needle is gradually shortened by moving the sample stage. When both have come into contact, the sample stage and the needle are immobilized. Subsequently, the sample stage is moved and slowly separated away to allow the water droplet to be deposited on the surface of the coated substrate. Within approximately 5 seconds after the droplet is deposited, the sample stage is tilted at a tilt rate of 2° per second, and a still image of the water droplet on the surface of the substrate is photographed at a zoom magnification of w1 every 1° tilt angle. The tilt angle of the sample stage at the time the contact line of the water droplet on the receding side starts to move (when the sample stage has moved by 0.1 to 1 mm) is determined to be the sliding angle.

### Sliding Velocity

The sliding velocity is measured with a Drop Master 701 meter (produced by Kyowa Interface Science Co., Ltd.). After a water droplet of 20 µL is formed on the tip of a needle, the distance between the surface of a coated substrate placed on a sample stage inclined at 30° beforehand and the water droplet on the tip of the needle is gradually shortened by moving the sample stage. When both have come into contact, the sample stage and the needle are immobilized. At this stage, the water droplet is motionless on the inclined coated substrate due to the injection needle. Within approximately 5 seconds after the water droplet stands still, the needle is moved and pulled away from the droplet, causing the droplet to fall, and the behavior of the droplet is captured in still images every 5 milliseconds (200 frames per second) with a high-speed camera. The zoom magnification for photographing is W2. Only when the contact line of the water droplet on the forward side can move by 15 to 20 mm per second is the droplet determined to have fallen. The results are plotted on a graph with the time taken for the water droplet to fall (seconds) on the horizontal axis and the distance traveled by the water droplet (mm) on the vertical axis. The inclination of the graph fit to least squares, assuming a linear function passing through the origin, is determined to be the sliding velocity (mm/s).

### Examples

The present disclosure is described in more detail with reference to Examples. However, the present disclosure is not limited to the embodiments of these Examples.

### Example 1

A film-forming composition containing 27 parts by mass of Sylysia 310P (produced by Fuji Silysia Chemical, Ltd.) as inorganic fine particles, 57 parts by mass of Zeffle GK-570 (produced by Daikin Industries, Ltd.) (on a solids basis) as a thermosetting resin, 13 parts by mass of Sumidur N-3300 (produced by Sumika Covestro Urethane Co., Ltd.) as a curing agent, and 3 parts by mass of Unidyne TG-6501 (produced by Daikin Industries, Ltd.) as water-repellent component A was prepared in a vial. After the film-forming composition was applied to a polycarbonate substrate by spraying, the polycarbonate substrate was treated at 130°C for 10 minutes, thereby forming a film.

### Example 2

A film was formed in the same manner as in Example 1, except that 13.5 parts by mass of Sylysia 310P and 13.5 parts by mass of Sylophobic 100 were used as inorganic fine particles.

### Example 3

A film was formed in the same manner as in Example 1, except for the use of a film-forming composition containing 27 parts by mass of Sylysia 310P having an average particle size of 2.7 µm as inorganic fine particles, 57 parts by mass (on a solids basis) of a copolymer formed mainly of tetrafluoroethylene and a vinyl monomer as a thermosetting resin, which corresponds to polymer F ("polymer F1" below), 13 parts by mass of Sumidur N-3300 as a curing agent, and 3 parts by mass of a copolymer disclosed in Preparation Example 2 of Patent No. 5831599A instead of Unidyne TG-6501 as a water-repellent component ("water-repellent component A" below).

### Example 4

A film was formed in the same manner as in Example 1, except for the use of a film-forming composition containing a mixture of 13.5 parts by mass of Sylysia 310P having an average particle size of 2.7 µm and 13.5 parts by mass of Sylophobic 100 having an average particle size of 2.7 µm as inorganic fine particles, 57 parts by mass (on a solids basis) of polymer F1 as a thermosetting resin, 13 parts by mass of Sumidur N-3300 as a curing agent, and 3 parts by mass of water-repellent component A instead of Unidyne TG-6501 as a water-repellent component.

### Example 5

### Preparation of Water-repellent Component B

35 g (0.1 mol) of stearyl acrylate ("StA" below) and 90 g of xylene were placed in a four-necked flask and subjected to nitrogen bubbling for 30 minutes. Thereafter, the mixture was heated to 90°C, and 0.085 g of 2,2'-azobisisobutyronitrile ("AIBN" below, 0.5 mol% relative to stearyl acrylate) was added, followed by starting a reaction. After 2 hours from the start of the reaction, 0.085 g of AIBN was further added, and the reaction was allowed to proceed for 4 hours. After 6 hours from the initial addition of AIBN, the reaction solution was added to 300 mL of acetone to perform reprecipitation. The thus-obtained precipitate was dried at 130°C for 2 hours, thereby obtaining a substance in the form of wax (water-repellent component B).

### Preparation of Coating

A coating was formed in the same manner as in Example 1, except that Unidyne TG-6501 was changed to water-repellent component B as a water-repellent component.

### Example 6

### Preparation of Water-repellent Component C

29.42 g (0.091 mol) of StA, 1.22 g (0.009 mol) of glycidyl methacrylate ("GMA" below), and 90 g of xylene were placed in a four-necked flask and subjected to nitrogen bubbling for 30 minutes. Thereafter, the mixture was heated to 90°C, and 0.081 g of AIBN (0.5 mol% relative to the total amount of StA and GMA) was added, followed by starting a reaction. After 2 hours from the start of the reaction, 0.081 g of AIBN was further added, and the reaction was allowed to proceed for 4 hours. After 6 hours from the initial addition of AIBN, 300 mL of the reaction solution was added to methanol to perform reprecipitation. The thus-obtained precipitate was dried at 130°C for 2 hours, thereby obtaining a substance in the form of wax (water-repellent component C).

### Preparation of Coating

A coating was formed in the same manner as in Example 1, except that Unidyne TG-6501 was changed to water-repellent component C as a water-repellent component.

### Example 7

### Preparation of Water-repellent Component D

Water-repellent component D was prepared in the same manner as the preparation method for liquid-repellent component C of Example 6, except that the amount of StA was changed to 19.6 g (0.06 mol), and 11.03 g (0.03 mol) of amidoethyl stearate acrylate was used instead of GMA.

### Preparation of Coating

A coating was formed in the same manner as in Example 1, except that Unidyne TG-6501 was changed to water-repellent component D as a water-repellent component.

### Comparative Example 1

A film was formed in the same manner as in Example 1, except that 45 parts by mass of Sylysia 310P were used as inorganic fine particles, 41 parts by mass (on a solids basis) of Zeffle GK-570 were used as a thermosetting resin, 9 parts by mass of Sumidur N-3300 were used as a curing agent, and 5 parts by mass of Unidyne TG-6501 were used as a water-repellent component.

### Comparative Example 2

A film was formed in the same manner as in Example 1, except that 63 parts by mass of Sylysia 310P were used as inorganic fine particles, 24 parts by mass (on a solids basis) of Zeffle GK-570 were used as a thermosetting resin, 6 parts by mass of Sumidur N-3300 were used as a curing agent, and 7 parts by mass of Unidyne TG-6501 were used as a water-repellent component.

### Comparative Example 3

A film was formed in the same manner as in Example 1, except that a mixture of 13.5 parts by mass of Sylysia 310P and 13.5 parts by mass of Sylophobic 100 was used as inorganic fine particles, and 3 parts by mass of perfluorohexyl ethyl trimethoxy silane ("Rf(C6) TMS" below) were used as a water-repellent component.

### Comparative Example 4

A film was formed in the same manner as in Example 1, except that 14 parts by mass of Sylysia 310P and 14 parts by mass of Sylophobic 100 were used as inorganic fine particles, and 2 parts by mass of Rf(C6) TMS were used as a water-repellent component.

### Evaluation of Film

### Water Contact Angle (Static Contact Angle)

The water contact angle was measured with a Drop Master 701 contact angle meter (Kyowa Interface Science Co., Ltd. Specifically, the water contact angle was measured at 5 points per sample by using water (a droplet of 2 µL). When the liquid was unable to stand on its own on the surface of a substrate at a static contact angle of 150° or greater, the static contact angle was measured with a syringe needle as a support, and the value obtained by doing so was determined to be the static contact angle.

### Pencil Hardness

The pencil hardness was measured by a method in accordance with JIS K 5600-5.

### Contact Angle after 72-hour Immersion Test

The contact angle after a 72-hour immersion test was measured by the same method as the method for measuring a water contact angle described above after immersing the film for 72 hours in water at 10 to 30°C that was left to stand in a room temperature atmosphere. The water contact angle was also measured with a contact angle meter (Drop Master 701, Kyowa Interface Science Co., Ltd.).

### Sliding Angle

The sliding angle was measured with a Drop Master 701 meter (produced by Kyowa Interface Science Co., Ltd.). After a water droplet of 20 µL was formed on the tip of a needle, the distance between the surface of a coated substrate placed on a horizontal sample stage and the water droplet on the tip of the needle was gradually shortened by moving the sample stage. When both came into contact, the sample stage and the needle were immobilized. Subsequently, the sample stage was moved and slowly separated away to allow the water droplet to be deposited on the surface of the coated substrate. Within approximately 5 seconds after the droplet was deposited, the sample stage was tilted at a tilt rate of 2° per second, and a still image of the water droplet on the surface of the substrate was photographed at a zoom magnification of w1 every 1° tilt angle. The tilt angle of the sample stage at the time the contact line of the water droplet on the receding side started to move (when the sample stage moved by 0.1 to 1 mm) was determined to be the sliding angle.

### Sliding Velocity

The sliding velocity was measured with a Drop Master 701 meter (produced by Kyowa Interface Science Co., Ltd.). After a water droplet of 20 µL was formed on the tip of a needle, the distance between the surface of a coated substrate placed on a sample stage inclined at 30° beforehand and the water droplet on the tip of the needle was gradually shortened by moving the sample stage. When both came into contact, the sample stage and the needle were immobilized. At this stage, the water droplet was motionless on the inclined coated substrate due to the injection needle. Within approximately 5 seconds after the water droplet stood still, the needle was moved and pulled away from the droplet, causing the droplet to fall, and the behavior of the droplet was captured in still images every 5 milliseconds (200 frames per second) with a high-speed camera. The zoom magnification for photographing was W2. Only when the contact line of the water droplet on the forward side could move by 15 to 20 mm in a second was the droplet determined to have fallen. The results were plotted on a graph with the time taken for the water droplet to fall (seconds) on the horizontal axis and the distance traveled by the water droplet (mm) on the vertical axis. The inclination of the graph fit to least squares, assuming a linear function passing through the origin, was determined to be the sliding velocity (mm/s).

### Evaluation of Abrasion Resistance

### Rubbing Test

The abrasion resistance was evaluated by a rubbing test described below. The contact angle with water of test specimens obtained in Examples 1 to 5 and Comparative Examples 1 and 2 was measured to determine their initial contact angle. Thereafter, a paper waste cloth (trademark: Kimwipe, produced by Nippon Paper Crecia Co., Ltd.) was attached to the holder (area in contact with a sample: 1 cm²) of a rubbing tester (151E abrasion resistance tester, triple series, a rubbing tester produced by Imoto machinery Co., Ltd.), and each test specimen was rubbed at a load of 100g/cm² for a predetermined number of times. The contact angle with water was then measured, and abrasion resistance to wiping was evaluated. The performance of abrasion resistance as referred to here is defined as the number of times of abrasion with which super water repellency can be maintained. (The average static contact angle of the five measurements is 150° or greater, or the average static contact angle of the five measurements is 140° or greater, and this average plus the standard deviation is 150° or greater.) In this test, the contact angle was measured in the same manner as in the Water Contact Angle (Static Contact Angle) section above.

**Table 1**

| Example and Comparative Example | Polymerizable Component (Binder Component) | | | Inorganic Fine Particles | | Water-repellent Component | | | | | | Test Results | | | | |
|---|---|---|---|---|---|---|---|---|---|---|---|---|---|---|---|---|
| | Zeffle GK-570 (Parts by Mass) | Polymer F1 (Parts by Mass) | Curing Agent (Parts by Mass) | Sylysia 310P (Parts by Mass) | Sylophobic 100 (Parts by Mass) | TG-6501 (Parts by Mass) | Water-repellent Component A (Parts by Mass) | Rf(C6) TMS (Parts by Mass) | Water-repellent Component B (Parts by Mass) | Water-repellent Component C (Parts by Mass) | Water-repellent Component D (Parts by Mass) | Static Contact Angle (°) | Pencil Hardness | Contact Angle after 72-hour Immersion (°) | Sliding Angle (°) | Sliding Velocity (mm/s) |
| Example 1 | 57 | - | 13 | 27 | - | 3 | - | - | - | - | - | >150 | HB | >150 | 1 | >200 |
| Example 2 | 57 | - | 13 | 13.5 | 13.5 | 3 | - | - | - | - | - | >150 | 2H | >150 | 1 | >200 |
| Example 3 | - | 57 | 13 | 27 | - | - | 3 | - | - | - | - | >150 | HB | >150 | 1 | >200 |
| Example 4 | - | 57 | 13 | 13.5 | 13.5 | - | 3 | - | - | - | - | >150 | 2H | >150 | 1 | >200 |
| Comparative Example 4 | 57 | - | 13 | 14 | 14 | - | - | 2 | - | - | - | <150 | 2H | - | - | - |

**Table 2**

| Example and Comparative Example | Polymerizable Component (Binder Component) | | | Inorganic Fine Particles | | Water-repellent Component | | | | | | Test Results | | | | | |
|---|---|---|---|---|---|---|---|---|---|---|---|---|---|---|---|---|---|
| | Zeffle GK-570 (Parts by Mass) | Polymer F1 (Parts by Mass) | Curing Agent (Parts by Mass) | Sylysia 310P (Parts by Mass) | Sylophobic 100 (Parts by Mass) | TG-6501 (Parts by Mass) | Water-repellent Component A (Parts by Mass) | Rf (C6) TMS (Parts by Mass) | Water-repellent Component B (Parts by Mass) | Water-repellent Component C (Parts by Mass) | Water-repellent Component D (Parts by Mass) | Static Contact Angle (°) | Pencil Hardness | Contact Angle after 72-hour Immersion (°) | Sliding Angle (°) | Sliding Velocity (mm/s) | Abrasion Resistance (Number of Times of Abrasion) |
| Example 5 | 57 | - | 13 | 27 | - | - | - | - | 3 | - | - | >150 | HB | >150 | 1 | >200 | 1000 |
| Example 6 | 57 | - | 13 | 27 | - | - | - | - | - | 3 | - | >150 | HB | >150 | 1 | 169 | 600 |
| Example7 | 57 | - | 13 | 27 | - | - | - | - | - | - | 3 | >150 | HB | >150 | 1 | 150 | 600 |
| Comparative Example 1 | 41 | - | 9 | 45 | - | 5 | - | - | - | - | - | >150 | 3B | >150 | 1 | >200 | 10 |
| Comparative Example 2 | 24 | - | 6 | 63 | - | 7 | - | - | - | - | - | >150 | 6B | >150 | 1 | >200 | 10 |
| Comparative Example 3 | 57 | - | 13 | 13.5 | 13.5 | - | - | 3 | - | - | - | >150 | 2H | <150 | 1 | >200 | 10 |

Tables 1 and 2 show the results of the static contact angle with water (water: 20 µL), pencil hardness, contact angle after the 72-hour immersion test, sliding angle, sliding velocity, and abrasion resistance (only in Table 2) of the films obtained in the Examples and Comparative Examples.

The results shown in the tables reveal that the films obtained in the Examples have excellent water resistance while having excellent super water repellency, hardness, and abrasion resistance. In contrast, because of the inappropriate content of inorganic fine particles, the films obtained in Comparative Examples 1 and 2 had a decreased level of hardness despite having super water repellency. The film obtained in Comparative Example 3 exhibited a substantial decrease in the contact angle after the 72-hour immersion test because of the absence of a polymer of the compound represented by formula (1) as a water-repellent component. The film obtained in Comparative Example 4 also exhibited worse water repellency because of the absence of a polymer of the compound represented by formula (1) as a water-repellent component.

## Claims

1. A film-forming composition comprising
an inorganic fine particle,
a polymerizable component, and
a water-repellent component, wherein
the inorganic fine particle has an average particle size of 100 nm or more and 5 µm or less,
the content of the inorganic fine particle is 5 to 40 parts by mass per 100 parts by mass of the total mass of the inorganic fine particle, the polymerizable component, and the water-repellent component, and
the water-repellent component is a polymer having at least a structure unit based on a compound represented by the following formula (1): 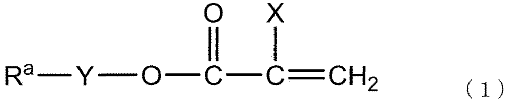 wherein
X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the - CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the -(CH₂)ₙSO₂- group is bound to O, and
R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.

2. The film-forming composition according to claim 1, wherein the content of the water-repellent component is 0.1 to 10 parts by mass per 100 parts by mass of the total mass of the inorganic fine particle, the polymerizable component, and the water-repellent component.

3. The film-forming composition according to claim 1 or 2, wherein the polymerizable component contains a polymer having a crosslinkable functional group and a curing agent.

4. A film comprising a cured product of the film-forming composition of any one of claims 1 to 3.

5. A film comprising
an inorganic fine particle,
a binder component, and
a water-repellent component, wherein
the inorganic fine particle has an average particle size of 100 nm or more and 5 µm or less,
the content of the inorganic fine particle is 5 to 40 parts by mass per 100 parts by mass of the total mass of the inorganic fine particle, the binder component, and the water-repellent component,
the water-repellent component is a polymer having at least a structure unit based on a compound represented by the following formula (1): 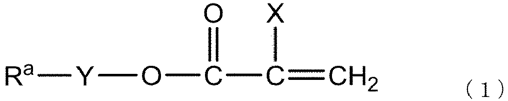 wherein
X represents a hydrogen atom, a fluorine atom, a chlorine atom, a bromine atom, an iodine atom, a CFX¹X² group wherein X¹ and X² are identical or different and represent a hydrogen atom, a fluorine atom, or a chlorine atom, a cyano group, a C₁₋₆ linear or branched fluoroalkyl group, a substituted or unsubstituted benzyl group, a substituted or unsubstituted phenyl group, or a C₁₋₂₀ linear or branched alkyl group,
Y represents a direct bond, a C₁₋₁₀ hydrocarbon group optionally having an oxygen atom, a -CH₂CH₂N(R¹)SO₂- group wherein R¹ represents a C₁₋₄ alkyl group, the right end of the - CH₂CH₂N(R¹)SO₂- group is bound to R^{a}, and the left end of the - CH₂CH₂N(R¹)SO₂- group is bound to O, a -CH₂CH(OY¹)CH₂- group wherein Y¹ represents a hydrogen atom or an acetyl group, the right end of the -CH₂CH(OY¹)CH₂- group is bound to R^{a}, and the left end of the - CH₂CH(OY¹)CH₂- group is bound to O, or a -(CH₂)ₙSO₂- group wherein n is 1 to 10, the right end of the -(CH₂)ₙSO₂- group is bound to R^{a}, and the left end of the -(CH₂)ₙSO₂- group is bound to O, and
R^{a} represents a linear or branched alkyl group having 20 or less carbon atoms, a linear or branched fluoroalkyl group having 6 or less carbon atoms, a polyether group having a molecular weight of 400 to 5000, or a fluoropolyether group having a molecular weight of 400 to 5000.

6. The film according to claim 5, wherein the content of the water-repellent component is 0.1 to 10 parts by mass per 100 parts by mass of the total mass of the inorganic fine particle, the binder component, and the water-repellent component.

7. A film comprising an inorganic fine particle, wherein the inorganic fine particle has an average particle size of 100 nm or more and 5 µm or less, a water contact angle of 150° or greater, and a pencil hardness of HB or higher.

8. The film according to claim 7, further comprising a water-repellent component containing no fluorine atom.

9. The film according to claim 7 or 8, having a water contact angle of 150° or greater after being rubbed with a paper waste cloth at a load of 100 g/cm² at least 50 times.

10. A chemical solution comprising the film-forming composition of any one of claims 1 to 3.
